Europäisches Patentamt

European Patent Office

Office européen des brevets

(19)

(11) Publication number: **0 239 125**
B1

(12) **EUROPEAN PATENT SPECIFICATION**

(45) Date of publication of the patent specification:
12.12.90

(51) Int. Cl.⁵: **B29C 59/04**, B32B 31/20,
B29D 9/00

(21) Application number: 87104597.7

(22) Date of filing: 27.03.87

(54) Film embossing process.

(30) Priority: 27.03.86 US 844960
23.01.87 US 2979

(43) Date of publication of application:
30.09.87 Bulletin 87/40

(45) Publication of the grant of the patent:
12.12.90 Bulletin 90/50

(84) Designated Contracting States:
BE DE FR GB IT NL

(56) References cited:
DE-A- 1 629 332
GB-A- 883 396
GB-A- 1 081 547
GB-A- 1 265 483
US-A- 2 953 818

(73) Proprietor: **E.I. DU PONT DE NEMOURS AND COMPANY,**
1007 Market Street, Wilmington Delaware 19898(US)

(72) Inventor: **Fruehauf, Vernon Paul,** PO Box 5135, Salt
Springs Florida 32637(US)
Inventor: **Hoefling, Albert Henry,** 807 Partridge Court,
Hockessin Delaware 19707(US)
Inventor: **Schlegel, William Stefan,** 4005 Rensch Road,
Williamsville New York 14227(US)

(74) Representative: **Abitz, Walter, Dr.-Ing. et al,** Abitz, Morf,
Gritschneder, Freiherr von Wittgenstein
Postfach 86 01 09, D-8000 München 86(DE)

ACTORUM AG

## Description

The invention relates to a process for embossing and fusing two or three layers of polyvinyl fluoride films without adhesive wherein two separate sheets of such film are passed between the nip of a heated roll and a backup roll, a pressure is maintained between the rolls and the temperature of the heated roll is maintained in the range of from 182 to 199°C while the temperature of the backup roll is maintained below 77°C and the film is then cooled and wound.

With such a process as it is known from GB-A 1 081 547 the surfaces of one or both of the films to be fused are heated by a flame of intense heat for a time sufficient to melt the surface of the film but for a time insufficient to cause distortion of the film before sealing the films to form a laminate. Both pressure rolls have a smooth surface and they are passed through the nip of the pressure rolls with a speed of more than 15 meters/minute.

The preparation of orientable polyvinyl fluorides is described in US-A 2 419 008; 2 419 010; 2 510 783 and 2 599 300. Polymers prepared according to these procedures have attractive properties, and in film form possess an unusual combination of excellent resistance to outdoor weathering exposures, a high degreee of physical toughness, chemical inertness, transparency and retention of properties at both low and elevated temperatures. These properties are manifested to an especially high degree in film derived from polymers of relatively high molecular weight.

Conventionally, when embossing two or more layers of such film, an adhesive or embossing resin is sandwiched between two sheets of the film to fuse them. It would be highly desirable from an economic viewpoint to fuse the sheets together while embossing them without the need for an adhesive.

The invention as claimed in claim 1 solves the problem of how to emboss and fuse two or more layers of polyvinyl fluoride films in a convenient manner.

Two examples of carrying out the invention are described in detail below with reference to drawings, in which:

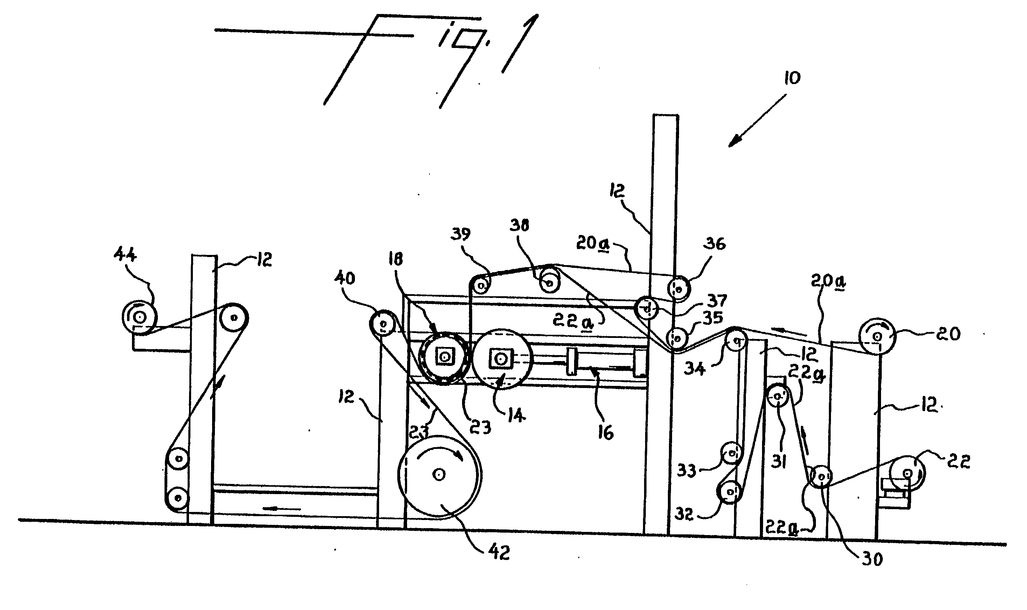

Fig. 1 is a schematic side elevation drawing of an embossing machine which may be used in the process of this invention;

Fig. 2 is a schematic representation of the fused embossed film of this invention;

Fig. 3 is a schematic side elevation drawing of an embossing machine utilized in embossing and fusing three layers of film and

Fig. 4 is a schematic representation of three layers of fused embossed film prepared according to the invention.

The embossing machine 10 chosen for purposes of illustration is of the type that includes a series of rolls both driven and idler that are mounted to a main frame 12. More particularly, a driven embossing roll 14 is internally hot oil heated and has hydraulic cylinders 16 mounted between the frame 12 and the ends of roll 14 to exert lateral pressure. Resisting the pressure of the embossing roll 14 is a rotatable backup roll 18 that is fixed in one position to the frame 12. The roll 18 has a rubber surface and is water cooled. Rolls 20, 22 of polyvinyl fluoride films 20a, 22a are rotatably mounted to one end of frame 12 and the two separate layers of films 20a and 22a are fed to the nip between rolls 14, 18 over a series of rolls designated 30 through 39. The rolls 30–39 control the tension and remove wrinkles from film 20a, 22a. After passing through rolls 14, 18, the combined film 23 passes over water cooled rolls 40, 42 where it is cooled before being wound on driven roll 44.

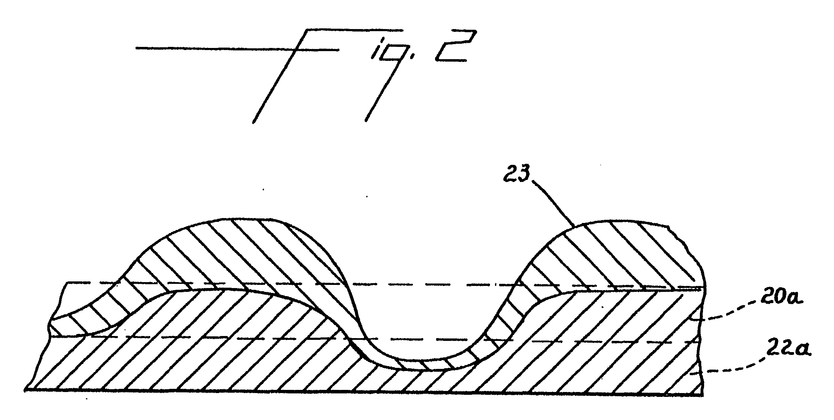

Fig. 2 shows film thickness of the combined film 23 after embossing and fusing of separate films 20a, 22a. In operation two sheets of film 20a, 22a are passed between the hot embossing roll 14 and the cool backup roll 18 under controlled pressure, temperature and speed. At this point, the pattern is pressed in, and the two sheets are fused together. Any variation in any one variable, and the pattern is lost and the films do not fuse together. A typical run speed for a pair of 0.05 mm (0.002 inch) thick films is from 0.9 to 1.36 m/minute (1 to 1–1/2 Y/ds/minute); the temperature of the embossing roll surface is between 182 to 199°C (360 and 390°F); the temperature of the surface of the backup roll can be no higher than 77°C (170°F); and the pressure between the rolls is between 70 and 75 kN/m (400 and 430 lbs/linear inch) of film width. The pressure and feed rate are dependent on the film thickness, and on the depth and type of pattern used. The torque of wind-up mandrel of roll 44 and two unwind mandrel of rolls 20, 22 are kept at the minimum necessary to prevent wrinkles.

In a series of runs at these conditions, the 0.1 mm (0.004 inch) thick (combined pair of 0.05 mm (2 mil) thick films) original film thickness is deformed to 0.175 mm (7 mil) by embossing, from the bottom of the film (which is smooth) to the top of pattern peaks as shown in Fig. 2. This embossed film pattern will survive deep vacuum forming on to shaped panels. The two layers of film are very difficult to separate without tearing.

While illustrated with 0.05 mm (2 mil) thick film, additional combinations utilizing 0.025, 0.075 and 0.1 mm (1, 3 and 4 mil) film thickness combinations can be used.

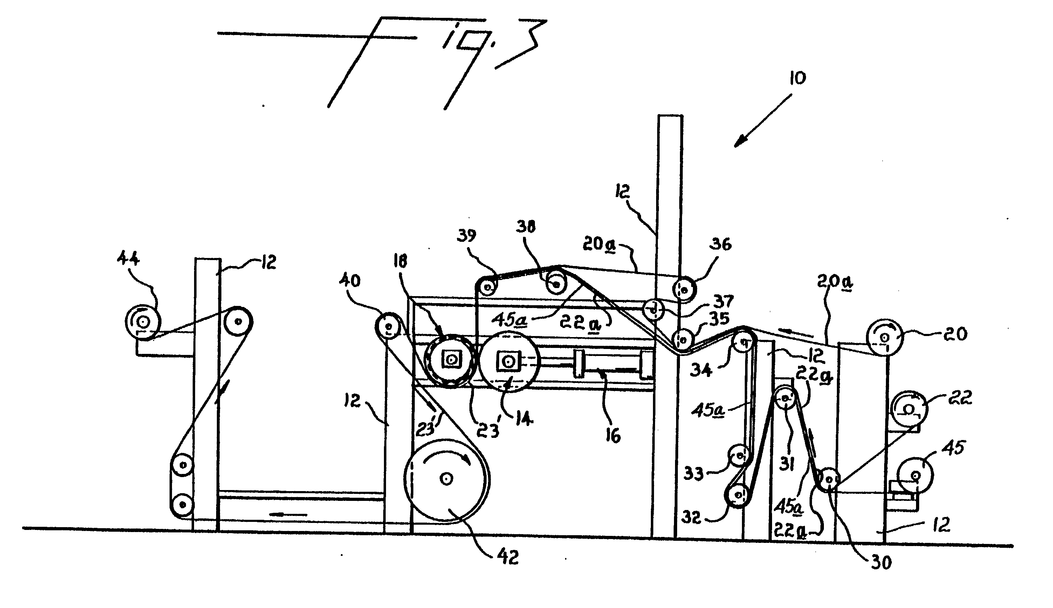

In another example of the invention rolls 20, 22, 45 of polyvinyl fluoride pigmented film 20a, 22a and transparent film 45a are rotatably mounted to one end of frame 12 (Fig. 3) and the three separate layers of films 20a, 22a, and 45a are fed to the nip between rolls 14, 18 over a series of rolls designated 30 through 39. The rolls 30–39 control the tension and remove wrinkles from film 20a, 22a, and 45a. After passing through rolls 16, 18, the combined film 23' passes over water cooled rolls 40, 42 where it is cooled before being wound on driven roll 44.

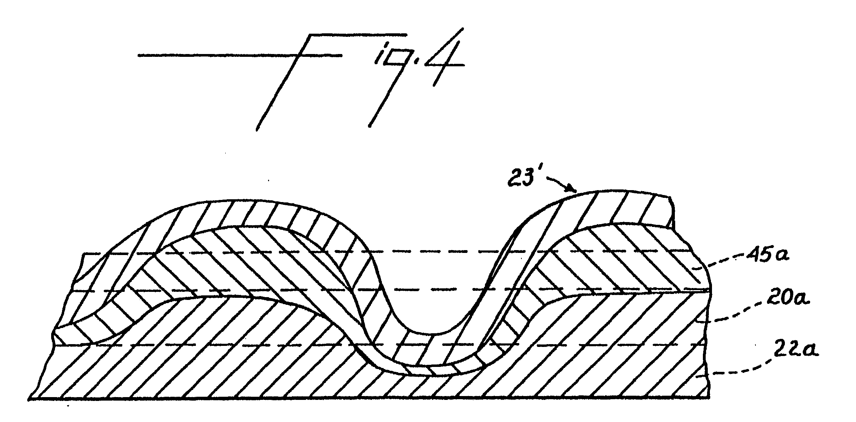

Fig. 4 shows film thickness of the combined film 23' after embossing and fusing of separate films 20a, 22a, and 45a. In operation three sheets of film 20a, 22a, and 45a are passed between the hot embossing roll 14 and the cool backup roll 18 under controlled pressure, temperature and speed. At this point, the pattern is pressed in, and the three sheets are fused together. Any variation in any one variable, and the pattern is lost and the films do not fuse together. A typical run speed for a combination of two 0.05 mm (0.002 inch) thick films with a 0.0175 mm (0.0007 inch) thick transparent film is from 0.68 to 1.36 m/minute (0.75 to 1.5 yds/minute); the temperature of the embossing roll surface is between 182 to 199°C (360 and 390°F); the temperature of the surface of the backup roll can be no higher than 77°C (170°F); and the pressure between the rolls is between 70 and 75 kN/linear meter (400 and 430 lbs/linear inch) of film width. The pressure and feed rate are dependent on the film thickness, and on the depth and type of pattern used. The torque of wind-up mandrel of roll 44 and three unwind mandrel of rolls 20, 22, and 45 are kept at the minimum necessary to prevent wrinkles.

In a series of runs at these conditions, the 0.12 mm (0.0047 inch) thick (combination of two 0.05 mm (2 mil) plus one 0.018 mm (.7 mil) thick films) original film thickness is deformed to 0.178 mm (7 mil) by embossing, from the bottom of the film (which is smooth) to the top of pattern peaks as shown in Fig. 4. This embossed film pattern will survive deep vacuum forming on to shaped panels. The three layers of film are very difficult to separate without tearing.

While illustrated with two 0.05 mm (2 mil) pigmented thick film and 0.018 mm (.7 mil) thick transparent film, additional combinations utilizing pigmented films of 1, 3 and 4 mil and transparent films of 0.0125 and 0.025 mm (.5 and 1 mil) thickness combinations can be used.

## Claims

1. Process for embossing and fusing two layers of polyvinyl fluoride films (20a, 22a) without adhesive comprising: passing two separate sheets (20a, 22a) of such film, each being about 0.05 to about 0.1 mm (0.002–0.004 inch) thick between the nip of a heated roll (14) and a backup roll (18), maintaining a pressure between the rolls (14, 18), maintaining the temperature of the heated roll (14) in the range of from 182 to 199°C (360–390°F) while maintaining the temperature of the backup roll (18) below 77°C (170°F) and then cooling and winding said film (23) characterized in that
the heated roll is an embossing roll (14);
the two separate sheets (20a, 22a) are passed between the nip at a speed of about 0.9 to 1.35 meters (1 to 1.5 yards) per minute and
the pressure between the rolls (14, 18) is about 70 to 75 kN per linear meter (400 to 430 lbs per linear inch) of film width.

2. Process according to claim 1 wherein three separate sheets (20a, 22a, 45a), each being about 0.0125 to about 0.1 mm (0.0005 to 0.004 inch) thick, are passed between the nip of the rolls (14, 18) at a speed of about 0.7 to 1.4 meters (0.75 to 1.5 yards) per minute.

## Patentansprüche

1. Verfahren zum Prägen und Verschweißen von zwei Lagen von Polyvinylfluoridfolien (20a, 22a) ohne Kleber, wobei zwei getrennte derartige Folien (20a, 22a) mit einer Stärke von jeweils etwa 0,05 bis 0,1 mm (0,002–0,004 Zoll) durch den Spalt einer Heizwalze (14) und einer Gegenwalze (18) geführt werden, zwischen den Walzen (14, 18) ein Druck aufrechterhalten wird, die Temperatur der Heizwalze (14) im Bereich von 182 bis 199°C (360–390°F) gehalten wird, während die Temperatur der Gegenwalze (18) unterhalb 77°C (170°F) gehalten wird, und dann die Folie (23) gekühlt und aufgewickelt wird, dadurch gekennzeichnet, daß
die Heizwalze eine Prägewalze (14) ist;
die beiden getrennten Folien (20a, 22a) mit einer Geschwindigkeit von etwa 0,9 bis 1,35 Meter (1 bis 1,5 Yards) pro Minute durch den Spalt geführt werden und
der Druck zwischen den Walzen (14, 18) etwa 70 bis 75 kN je Meter (400 bis 430 lbs pro Zoll) der Folienbreite beträgt.

2. Verfahren nach Anspruch 1, wobei drei getrennte Folien (20a, 22a, 45a) mit einer Stärke von jeweils etwa 0,0125 bis etwa 0,1 mm (0,0005 bis 0,004 Zoll) mit einer Geschwindigkeit von etwa 0,7 bis 1,4 m (0,75 bis 1,5 Yards) pro Minute durch den Spalt der Walzen (14, 18) geführt werden.

## Revendications

1. Procédé pour gaufrer et souder deux couches de pellicule de fluorure de polyvinyle (20a, 22a) sans adhésif, consistant à: faire passer deux feuilles séparées (20a, 22a) d'une telle pellicule, ayant chacune environ 0,05 à environ 0,1 mm (0,002 à 0,004 pouce) d'épaisseur, par la ligne de pincement d'un rouleau chauffé (14) et d'un rouleau presseur (18), maintenir une pression entre les rouleaux (14, 18), maintenir la température du rouleau chauffé (14) dans l'intervalle de 182 à 199°C (360 à 390°F) tout en maintenant la température du rouleau presseur (18) au-dessous de 77°C (170°F), puis refroidir et enrouler ladite pellicule (23), caractérisé en ce que
le rouleau chauffé est un rouleau de gaufrage (14);
les deux feuilles séparées (20a, 22a) sont amenées à passer par la ligne de pincement à une vitesse d'environ 0,9 à 1,35 mètre (1 à 1,5 yard) par minute et la pression entre les rouleaux (14, 18) est d'environ 70 à 75 kN par mètre linéaire (400 à 430 livres par pouce linéaire) de largeur de pellicule.

2. Procédé selon la revendication 1, dans lequel trois feuilles séparées (20a, 22a, 45a), ayant chacune environ 0,0125 à environ 0,1 mm (0,0005 à 0,004 pouce), sont amenées à passer par la ligne de pincement des rouleaux (14, 18) à une vitesse d'environ 0,7 à 1,4 mètre (0,075 à 1,5 yard) par minute.

Fig. 1

EP 0 239 125 B1

Fig. 2

Fig.4

23'

45a

20a

22a

EP 0 239 125 B1